# EUROPÄISCHE PATENTSCHRIFT

(11) **EP 0 956 717 B1**
(45) Veröffentlichungstag und Bekanntmachung des Hinweises auf die Patenterteilung: **26.05.2004**
(21) Anmeldenummer: 98900473.4
(22) Anmeldetag: 28.01.1998
(51) Int. Cl.: H04Q 7/00, H04Q 7/22, G08G 1/127

(54) **SYSTEM ZUR TELEFONISCHEN VERMITTLUNG VON MOBILEN DIENSTLEISTUNGSANBIETERN SOWIE FAHRZEUG FÜR DIESES SYSTEM**
TELEPHONE SWITCHING SYSTEM FOR MOBILE SERVICE PROVIDERS AND VEHICLE FOR SAID SYSTEM
SYSTEME DE TELECOMMUNICATION DE FOURNISSEURS DE SERVICES MOBILES ET VEHICULE POUR CE SYSTEME

(30) Priorität: 28.01.1997 AT 12097
(43) Veröffentlichungstag der Anmeldung: 17.11.1999
(73) Patentinhaber: Mag. Wolfgang Mauer Gesellschaft MBH, 1050 Wien (AT)
(72) Erfinder: MAUER, Wolfgang, A-1050 Wien (AT)
(74) Vertreter: Müllner, Erwin, Dr.
(86) Internationale Anmeldenummer: PCT/AT1998/000018
(87) Internationale Veröffentlichungsnummer: WO 1998/033336

(56) Entgegenhaltungen:
- EP-A- 0 235 498
- WO-A-94/14291
- DE-A- 4 424 412
- PASCHALL R L: "Computer tracks taxi locations, improves dispatching results" MOBILE RADIO TECHNOLOGY., Bd. 13, Nr. 2, Februar 1995, Seiten 10-12, 14, 16, 20, 22, 24, XP000491164 Overland Park, KS, US
- "Système automatique de repérage à Neuchâtel. Où est passé mon taxi?" REVUE AUTOMOBILE, Bd. 89, Nr. 33, 11. August 1994, Seite 12 XP000444504 Berne, CH
- EWE J: "Die >>eierlegende Wollmilchsau<< Taxifunkzentrale liegt mit massgeschneidertem Kommunikationssystem auf Erfolgskurs" TELCOM REPORT., Bd. 17, Nr. 5, September 1994, Seite 188/189 XP000474835 MÜNCHEN, DE
- DENZLER B: "Datenfunk-gestützte Taxidisposition" ASCOM TECHNISCHE MITTEILUNGEN, Nr. 1, 1990, Seiten 7-11, XP000137293 Bern, CH

## Beschreibung

### TECHNISCHES GEBIET

System zur telefonischen Vermittlung von mobilen Dienstleistungsanbietern, insbesondere von Taxis, an Kunden, wobei jeder Dienstleistungsanbieter mit einem Mobiltelefon, mit einem Teilnehmerspeicher, in dem zumindest eine Kennzahl des Dienstleistungsanbieters gespeichert ist, sowie mit einem GPS-Empfänger ausgestattet ist, wobei weiters eine Zentrale vorgesehen ist, die über das Mobiltelefonnetz mit jedem Dienstleistungsanbieter verbindbar ist und die eine ausreichende Anzahl von Telefonanschlüssen aufweist, wobei in der Zentrale auf Grund der Telefonnummer des Anrufers oder eines von ihm eingewählten Codes dessen ungefährer oder genauer Standort ermittelt und aufgrund dessen ein Fahrzeug in der Nähe ausgewählt wird, wonach der Anrufer zu dem Dienstleistungsanbieter in diesem Fahrzeug über das Mobiltelefonnetz verbunden wird.

### STAND DER TECHNIK

Die derzeit verwendeten Systeme der Taxifunkfahrtenvermittlung sind durch hohe Personalkosten gekennzeichnet. Das System muß über die Funkgebühren von den mobilen Teilnehmern (Unternehmern) erhalten werden, ohne daß diese Kosten dem Kunden in voller Höhe verrechnet werden können.

Aus diesem Grunde ist bereits ein System der eingangs genannten Art vorgeschlagen worden (siehe WO-A-94/14291). Die Kunden haben die Möglichkeit, von analogen oder digitalen Apparaten anzurufen. Die Kontaktaufnahme mit der Zentrale erfolgt nach Möglichkeit über eine leicht merkbare Nummer, wie dies bei den heutigen Taxifunkfahrtenvermittlungen bereits üblich ist. Der Kunde wählt die Nummer und wird von einer künstlichen Stimme empfangen. Wenn seine Telefonnummer automatisch ermittelt werden kann, weil sowohl der Anrufer als auch die Zentrale an das digitale Telefonnetz angeschlossen sind, wird dies getan; sonst wird der Anrufer aufgefordert, seine eigene Telefonnummer zu wählen. Als Option können noch Wahlmöglichkeiten, wie etwa Wagentype, Geschlecht des Fahrers oder Sprachkenntnisse des Fahrers, angeboten werden. Aufgrund der Telefonnummer wird die Adresse des Anrufers ausfindig gemacht. (Dazu dient ein "umgekehrtes Telefonbuch", also ein Verzeichnis, das nach Telefonnummern geordnet ist, sodaß auf Grund der Telefonnummer Informationen über den Inhaber der Telefonnummer abgefragt werden können.) Dann wird ein freier Dienstleistungsanbieter (der gegebenenfalls die vom Anrufer geforderten Kriterien bezüglich Wagentype, Geschlecht oder Sprachkenntnisse erfüllt) in der Nähe ermittelt und das Gespräch zu diesem Dienstleistungsanbieter verbunden. Der Anrufer kann nun direkt mit dem Dienstleistungsanbieter sprechen und ihm z.B. seine Adresse sowie Informationen über die günstigste Zufahrtmöglichkeit geben.

Bei dem bekannten System wird die Position jedes Dienstleistungsanbieters über einen GPS-Empfänger ermittelt und an die Zentrale übermittelt.

Aus PASCHALL R L: 'Computer tracks taxi locations, improves dispatching results' MOBILE RADIO TECHNOLOGY., Bd. 13, Nr. 2, Februar 1995, Seiten 10-12, 14, 16, 20, 22, 24, XP000491164 Overland Park, KS, US ist bekannt, das Versorgungsgebiet in verschiedene Sektoren aufzuteilen. Jedes Fahrzeug, das sich in einem bestimmten Sektor als frei meldet, kommt mit niedrigster Priorität in einen Wartespeicher. Gemäß dieser Schrift werden die Telefonanrufe von Betreuern entgegengenommen, die die Daten des Kunden in die EDV-Anlage eingeben. Die EDV-Anlage ermittelt den Sektor des Kunden und wählt den Dienstleistungsanbieter mit der höchsten Priorität in diesem Sektor aus.

Nachteilig ist bei beiden Systemen, daß es leicht zu Fehlern kommen kann, die auch beabsichtigt sein können. So kann sich zum Beispiel ein Dienstleistungsanbieter bereits als frei melden, obwohl er noch mit einem Kunden unterwegs ist, sodaß er sich dadurch im Wartespeicher vordrängt.

Dies kann bei den bekannten Systemen nur verhindert werden, indem entsprechende Kontrollen vor Ort durchgeführt werden, sodaß der Vorteil der Personaleinsparung in der Zentrale durch den Aufwand für die motorisierten Kontrollore zumindest teilweise wieder zunichte gemacht wird.

In 'Système automatique de repèrage á Neuchätel. Oü est passe mon taxi?' REVUE AUTOMOBILE, Bd. 89, Nr. 33, 11. August 1994, Seite 12 XP000444504 Berne, CH ist eine Überwachung von Position und Geschwindigkeit aller Fahrzeuge einer Taxi-Flotte mittels GPS-Empfänger beschrieben, die die Werte an eine Zentrale übermitteln.

### OFFENBARUNG DER ERFINDUNG

Es ist Aufgabe der vorliegenden Erfindung, das System der eingangs genannten Art so weiterzubilden, daß es für die Dienstleistungsanbieter einfacher zu bedienen und gleichzeitig manipulationssicher ist.

Diese Aufgabe wird durch ein System der eingangs genannten Art erfindungsgemäß dadurch gelöst, daß in der Zentrale mehrere Wartespeicher für verschiedene Sektoren vorgesehen sind, in denen die Kennzahl von jedem Dienstleistungsanbieter, der in dem entsprechenden Sektor auf einen Auftrag wartet, gespeichert ist, daß auf Grund des ermittelten Standorts des Anrufers der Sektor, in dem dieser Standort liegt oder der diesem am nächsten liegt, ausfindig gemacht wird, daß der Dienstleistungsanbieter mit der höchsten Priorität im Wartespeicher des entsprechenden Sektors ausgewählt wird, daß ein Geschwindigkeitsmelder vorgesehen ist, wobei Mittel vorgesehen sind, die bei stillstehendem Fahrzeug und - wenn ein Taxameter vorhanden ist - bei freiem Taxameter die Kennzahl sowie die vom GPS ermittelten Positionskoordinaten, ausgelöst durch den Dienstleistungsanbieter oder automatisch, an die Zentrale übermitteln, vorzugsweise über einen vom Mobiltelefonnetz unabhängigen Datenfunk, worauf aufgrund der Positionskoordinaten der entsprechende Sektor ermittelt wird und die Kennzahl des Dienstleistungsanbieters mit geringster Priorität im Wartespeicher dieses Sektors abgespeichert wird, und daß Mittel vorgesehen sind, die bei Überschreiten einer bestimmten Geschwindigkeit, beispielsweise etwa 20 km/h, automatisch eine entsprechende Meldung an die Zentrale erstatten, worauf der Dienstleistungsanbieter aus dem Wartespeicher gelöscht wird.

Wenn ein Taxi auf einem Standplatz auf einen Auftrag wartet, ist der Taxameter frei, und die Geschwindigkeit ist meist null; nur wenn das Taxi in der Schlange vorrückt, hat es kurz eine geringe Geschwindigkeit. Eine Aufnahme in den Wartespeicher eines bestimmten Sektors ist bei dem erfindungsgemäßen System daher nur möglich, wenn das Fahrzeug in dem betreffenden Sektor steht, und wenn ein Taxameter vorhanden ist, muß überdies dieser auf frei stehen. Ein Mißbrauch des Systems ist damit praktisch ausgeschlossen.

Die Übertragung der Daten kann entweder über das Mobiltelefonnetz oder über einen davon unabhängigen Datenfunk erfolgen. Bei der derzeitigen Preislage ist letzterer kostengünstiger.

Wenn kein Taxameter vorhanden ist und die Daten automatisch übertragen werden sollen, muß natürlich eine Möglichkeit bestehen, daß der Fahrer sich auf andere Weise als "frei" oder als "besetzt" deklariert.

Bei Überschreiten einer bestimmten Geschwindigkeit, beispielsweise etwa 20 km/h, erfolgt automatisch eine entsprechende Meldung an die Zentrale, worauf der Dienstleistungsanbieter aus dem Wartespeicher gelöscht wird. Dies verbessert nicht nur den Bedienungskomfort, es schützt das System zusätzlich vor Mißbrauch. Es ist z.B. nicht möglich, daß ein Taxi von einem Sektor in einen anderen fährt, während es im Wartespeicher des ersten Sektors gespeichert bleibt.

Es ist zweckmäßig, wenn von der Zentrale zum Dienstleistungsanbieter dessen Reihung im Wartespeicher sowie die Anzahl der Dienstleistungsanbieter im Wartespeicher anderer Sektoren übertragbar ist. Damit kann jeder Dienstleistungsanbieter jederzeit Informationen abrufen, auf Grund derer er entscheiden kann, ob es sinnvoll ist, an der derzeitigen Stelle weiter zu warten, oder ob es besser ist, in einen anderen Sektor zu fahren und sich dann in den Wartespeicher des anderen Sektors neu einreihen zu lassen. Gerade wenn derartige zusätzliche Informationen übertragbar sind, ist es sinnvoll, dies über Datenfunk und nicht über das Mobiltelefonnetz zu tun, weil der Datenfunk für die Übertragung kurzer Informationen kostengünstiger ist.

Gemäß einem weiteren Merkmal der Erfindung ist vorgesehen; daß in der Zentrale ein Telefonnummernspeicher vorgesehen ist, in dem die Telefonnummer jedes Anrufers und der Dienstleistungsanbieter, mit dem der Anrufer verbunden wurde, gespeichert werden, sodaß jeder Dienstleistungsanbieter nach Auftragsübernahme einen automatischen Rückruf durchführen kann. Dies ist nicht nur dann sinnvoll, wenn bei der Anfahrt zum Anrufer Probleme auftreten (wenn der Fahrer z.B. die Adresse nicht findet), sondern auch für den Normalfall, weil dann der Anrufer nicht auf der Straße warten muß, sondern bei seinem Telefon bleiben kann, bis er rückgerufen wird und mitgeteilt bekommt, daß das Taxi (oder der Botendienst) hier ist.

Nach einer weiteren Ausgestaltung der Erfindung sind Mittel vorgesehen, die den Anrufer nach erfolgter Vermittlung zu einem Dienstleistungsanbieter automatisch zum nächsten Dienstleistungsanbieter im Wartespeicher schalten, falls keine Einigung über die Dienstleistung erzielt wird. So wird z.B. ein Taxifahrer knapp vor Dienstschluß keine lange Fahrt annehmen. Es braucht dann nur der Taxifahrer oder der Anrufer auf eine bestimmte Taste des Telefons zu drücken, und der Anrufer wird automatisch zum nächsten Taxifahrer verbunden.

Schließlich ist es zweckmäßig, wenn der GPS-Empfänger derart gestaltet ist, daß er die Koordinaten des Dienstleistungsanbieters regelmäßig automatisch übermittelt, z.B. immer dann, wenn das Fahrzeug eine bestimmte Strecke zurückgelegt hat.

Ein Fahrzeug, das für das erfindungsgemäße System geeignet ist, enthält ein Mobiltelefon, ein Datenfunkgerät und einen Teilnehmerspeicher, in dem zumindest eine Kennzahl des Dienstleistungsanbieters gespeichert ist, wobei es zusätzlich einen GPS-Empfänger aufweist, der an das Datenfunkgerät angeschlossen ist.

In der Zentrale sind im wesentlichen folgende Teile vorhanden: eine Telefonanlage, die ankommende Gespräche in das Mobiltelefonnetz weitervermitteln kann; ein Computer, der mit der Telefonanlage in Verbindung steht und eine Sprachausgabe aufweist; ein nach Telefonnummern abrufbares Benutzerverzeichnis, das mit dem Computer in Verbindung steht; eine Funkleitstelle, die über ein Datenfunknetz mit den Fahrzeugen der Dienstleistungsanbieter in Verbindung treten kann und die mit dem Computer verbunden ist; und eine Speichereinheit (die natürlich ein Teil des Computers sein kann), die zumindest für jeden Sektor einen Wartespeicher aufweist.

### KURZE BESCHREIBUNG DER ZEICHNUNG

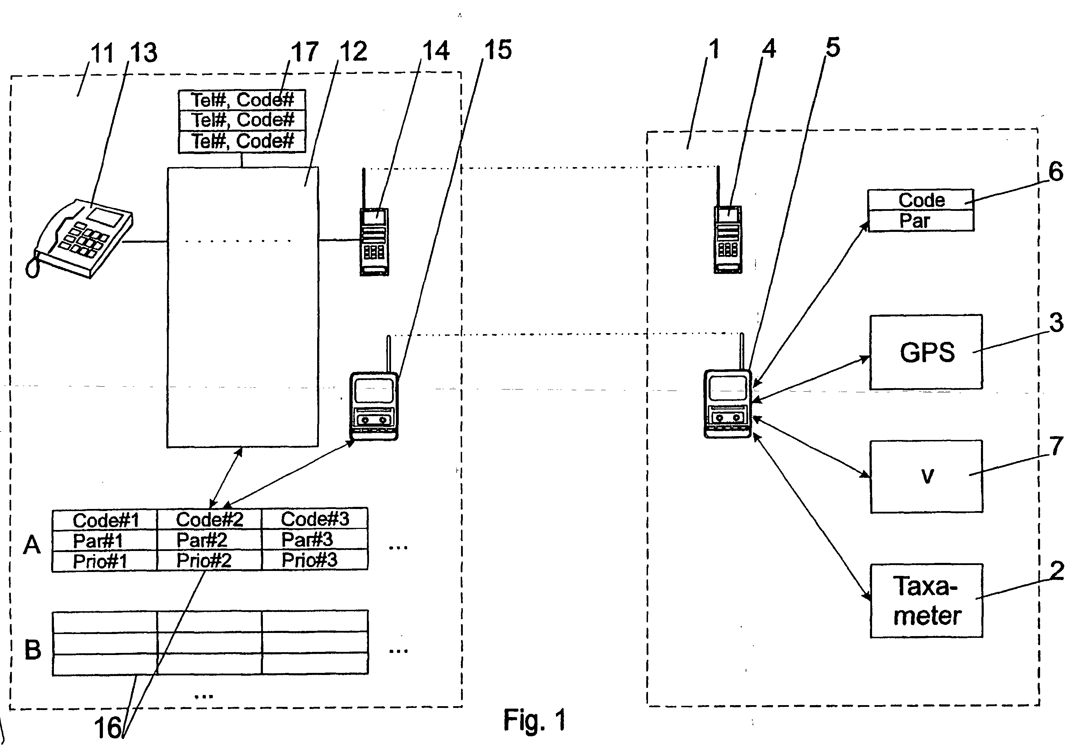

Im folgenden wird nun anhand eines Beispiels, nämlich des Taxifunks, und anhand der beiliegenden Zeichnung die vorliegende Erfindung näher erläutert. Fig. 1 zeigt ein Blockschaltbild einer Zentrale und eines Taxis. Die Erfindung ist aber nicht auf Taxis beschränkt. Sie läßt sich ebenso anwenden bei Botendiensten und allen anderen mobilen Dienstleistungsanbietern, z.B. bei Aufsperrdiensten oder Diensten zur Gebrechensbehebung bei Installationen und dgl.

### BESTE AUSFÜHRUNGSFORM DER ERFINDUNG

Jedes Taxi 1, das an dem erfindungsgemäßen System teilnimmt, ist mit einem elektronischen Taxameter 2, einem differentiellen GPS-Empfänger 3, einem Mobiltelefon 4 und einem Datenfunkgerät 5 ausgerüstet. In einem Teilnehmerspeicher 6 ist entweder eine Kennzahl (Code) oder es sind Name und Adresse des Unternehmers, Wagennummer, Wagentype (PKW, Kombi), Kennzeichen u.s.w. gespeichert.

Das Datenfunkgerät 5 ist mit einem Bewegungsmelder 7 gekoppelt, der ab einer gewissen Geschwindigkeit einschreitet. Der Bewegungsmelder 7 kann entweder die Drehung eines Rades des Fahrzeuges erfassen, oder aber er kann die vom GPS-Empfänger 3 gelieferten Positionsdaten auswerten und so feststellen, ob sich das Fahrzeug bewegt oder ob es steht. Wenn der Taxameter 2 auf frei geschaltet ist und das Fahrzeug steht, so kann man davon ausgehen, daß das Fahrzeug auf einem Taxistandplatz steht. Unter diesen Voraussetzungen ist es daher dem Lenker möglich, durch Drücken einer Taste die genauen, durch den GPS-Empfänger 3 ermittelten Positionsdaten und die Bereitschaft zur Dienstleistung der Zentrale 11 über das Datenfunkgerät 5 mitzuteilen. Dabei wird natürlich auch die Kennung (Code) bzw. die gesamte im Teilnehmerspeicher 6 enthaltene Information übertragen. Wenn ein neuer Fahrer seinen Dienst beginnt, muß er auch seine persönlichen Kenndaten (Geschlecht, Sprachkenntnisse u.dgl.) eingeben; alternativ kann natürlich diese Information für jeden Fahrer in der Zentrale gespeichert sein, sodaß jeder Fahrer nur seinen Fahrercode (Par) eingeben und übertragen muß. In der Zentrale 11 werden nun die Positionskoordinaten des sich anmeldenden Fahrzeugs dem entsprechenden Sektor (A, B ...) zugeordnet, und in dem Wartespeicher 16 dieses Sektors wird die Kennung (Code) des Fahrzeugs mit niedrigster Priorität abgespeichert. Nach diesen Vorgängen in der Zentrale 11 erfolgt durch diese eine Rückmeldung an das Datenfunkgerät 5 im Fahrzeug. Der Fahrer sieht am Display seine Warteposition im Sektor. Würde das Fahrzeug höhere Geschwindigkeiten erreichen (beispielsweise 20 km/h), würde dies automatisch über das Datenfunkgerät 5 an die Zentrale 11 übermittelt werden, die daraufhin die Kennung des Fahrzeugs aus dem entsprechenden Wartespeicher 16 löschen würde. In diesem Fall kann man nämlich davon ausgehen, daß entweder ein Auftrag angenommen wurde, oder aber daß der Fahrer sich in einem anderen Sektor aufstellen möchte. Langsames Vorrücken in der Warteschlange am Standplatz wird durch das System nicht erfaßt. Der Fahrer kann jederzeit mittels des Datenfunkgeräts 5 bei der Zentrale anfragen, was seine derzeitige Warteposition ist, oder wie groß die Anzahl der wartenden Fahrzeuge in anderen Sektoren ist.

Auf diese Weise gibt es in der Zentrale für jeden Sektor (A, B ...) einen Wartespeicher 16, in dem gespeichert ist, welche Fahrzeuge in dem jeweiligen Sektor (A, B ...) warten und in welcher Reihenfolge sie drankommen. Diese Datenerfassung erfolgt in der Zentrale vollautomatisch.

Wenn ein Kunde ein Taxi braucht, wählt er die Telefonnummer der Zentrale (Telefon 13). Er wird von einer künstlichen Stimme (Computerstimme) begrüßt. Die erste eventuelle Wahlmöglichkeit ist die Sprachauswahl (z.B. deutsch, englisch oder französisch). Die Auswahl erfolgt durch Wählen einer entsprechenden Ziffer. Wenn die Telefonnummer des anrufenden Kunden automatisch ermittelt werden kann (weil das Gespräch ausschließlich im bereits digitalisierten Telefonnetz stattfindet), wird die Nummer erfaßt. Andernfalls setzt die künstliche Stimme fort und fordert den Kunden zum Einwählen der eigenen Telefonnummer auf. Das System ermittelt nun auf Grund der Telefonnummer die Adresse des Kunden. Wenn das System zusammen mit einem Postdienst betrieben wird, sind die entsprechenden Daten dort ohnehin bereits in maschinlesbarer Form vorhanden. Die Kundenadresse wird durch einen entsprechend programmierten Rechner 12 einem Sektor (A, B ...) zugeordnet. Der Kunde kann nun sofort durchgeschaltet werden (Mobilfunk 4, 14) und auf die direkte Sprachverbindung mit dem Taxi in seinem Sektor, das jetzt an der Reihe ist, warten. Er kann aber vorher auch noch spezielle Wünsche bekanntgeben, z.B. bezüglich der Wagentype (PKW oder Kombi); in diesem Fall wird er nur an ein Fahrzeug dieser Type verbunden, auch wenn es im entsprechenden Sektor noch nicht an der Reihe ist.

Der Kunde kann nun direkt mit dem Fahrer sprechen, die Adresse und die Zufahrt bekanntgeben. Das System merkt sich die Telefonnummern der Partner dieser Verbindung noch einige Zeit (Telefonnummernspeicher 17), damit bei Problemen noch einmal Verbindung aufgenommen werden kann; vom Kunden zum Fahrer, um vielleicht anzufragen, wie lange es noch dauert; vom Fahrer zum Kunden, wenn etwa die Anfahrt Schwierigkeiten macht. Insbesondere bei Taxis ist aus Sicherheitsgründen zu empfehlen, diese Information auch nach Auftragsübernahme noch einige Zeit gespeichert zu lassen, um bei der Aufklärung von Verbrechen leichter zum Ziel zu kommen (Sicherheit des Lenkers).

Das erfindungsgemäße System der Fahrtenvermittlung könnte ausschließlich über die Telefonrechnung der Anrufer finanziert werden (sogenannter "Mehrwertdienst mit höherer Vergebührung"). In diesem Fall ist dann im System ein Zählspeicher vorhanden, der jede zustandegekommene Wählverbindung registriert und abspeichert. Über diesen Zählspeicher kann dann die Verrechnung mit der Telefongesellschaft erfolgen.

Für Kunden, die mit dem System nicht zurecht kommen, gibt es die Möglichkeit, sich auf einen Betreuungsplatz mit einem Sprecher oder einer Sprecherin verbinden zu lassen. In diesem Fall werden dann die Daten und Wünsche des Kunden vom Sprecher bzw. der Sprecherin in das System eingegeben. Dort kann auch eine persönliche Beratung erfolgen. Dies ist vor allem für den Erstkontakt wichtig.

Kunden, die über ein Mobiltelefon ein Taxi rufen, haben die Option, durch Einwählen der Postleitzahl den Sektor ihres Standortes der Zentrale zu übermitteln. Das System verfügt dann ebenfalls über den Sektor des Kundenstandortes und kann den Kunden nun mit dem Taxi dieses Sektors, das die höchste Priorität hat, verbinden.

Wenn ein Taxi von einem Lokal, Spital oder dgl. gerufen wird, hat das anrufende Personal meist keine Zeit, die Herstellung einer Direktverbindung zum Taxi abzuwarten und das Gespräch zu führen. Für diesen Fall besteht die Möglichkeit, sich beim Erstanruf vom Betreuungsplatz einen eigenen Zahlencode geben zu lassen. Wenn dann in Hinkunft dieser Code eingewählt wird, kann sofort aufgelegt werden. Im System wird dann der entsprechende Sektor auf Grund dieses Codes ermittelt (die aufwendigere Suche der Adresse auf Grund der Telefonnummer kann entfallen) und das Taxi mit der höchsten Priorität im entsprechenden Sektor angerufen. Mittels einer künstlichen Stimme wird dem Fahrer die Adresse in Endloswiederholung bekanntgegeben. Die Annahme des Auftrages wird dem System vom Fahrer durch Drücken einer bestimmten Taste am Mobiltelefon mitgeteilt. Auch hier kann die Verbindung mit der Zentrale jederzeit wiederhergestellt werden, falls der Fahrer die Adresse einmal vergessen sollte.

Der Kunde hat auch die Möglichkeit, auf gleiche Weise eine Vorbestellung im System zu positionieren, die dann z.B. 15 min vor der Zeit an das Fahrzeug höchster Priorität im nächsten Sektor weitergeleitet wird. Die Uhrzeit der Vorbestellung wird entweder vom Anrufer gesprochen oder aber mit den Tasten des Telefons eingewählt. Die Adresse wird in jedem Fall gesprochen und gespeichert und zur gegebenen Zeit dem Taxifahrer über das Mobiltelefon vorgespielt.

Bei Kapazitätsengpässen (z.B. bei Schlechtwetter, Schneefall) hat der diensthabende Techniker die Möglichkeit, das Vorbestellungssystem zu deaktivierten, da nicht sicher ist, ob zur gegebenen Zeit ein Fahrzeug verfügbar sein wird. Bereits aufgenommene Vorbestellungen werden mittels automatisiertem Rückruf und künstlicher Stimme nach Abstellen der Vorbestellungsoption automatisch storniert.

Vom erfindungsgemäßen System wurde nun anhand eines Beispiels das Grundprinzip beschrieben, das natürlich ausgebaut und erweitert werden kann. Es wird insbesondere sinnvoll sein, bereits derzeit verwendete organisatorische Maßnahmen beim Taxi-Datenfunk auch beim erfindungsgemäßen System zu integrieren. So ist es möglich, vorzusehen, daß jeder Fahrer, der einen Auftrag annimmt, einen kurzen Zahlencode für das Zielgebiet ins Datenfunkgerät eingibt und an die Zentrale übermittelt. Die Kennung des Fahrzeugs wird dann in einem Anfahrtspeicher, der in der Zentrale für jeden Sektor zusätzlich zum Wartespeicher vorgesehen ist, gespeichert. Ist weder im Sektor des Anrufers noch in einem benachbarten Sektor ein Fahrzeug frei, so wird das Gespräch zu einem Fahrzeug verbunden, das in den Sektor des Kunden (oder in einen benachbarten Sektor) unterwegs ist.

Gerade in diesem Fall ist es zweckmäßig, wenn der GPS-Empfänger automatisch z.B. immer dann, wenn das Fahrzeug eine bestimmte Strecke zurückgelegt hat, die Positionskoordinaten an die Zentrale übermittelt. Auf diese Weise können die Fahrer automatisch kontrolliert werden, ob die von ihnen eingegebenen Zielgebiete auch stimmen.

## Patentansprüche

1. System zur telefonischen Vermittlung von mobilen Dienstleistungsanbietern (1), insbesondere von Taxis (1), an Kunden, wobei jeder Dienstleistungsanbieter (1) mit einem Mobiltelefon (4), mit einem Teilnehmerspeicher (6), in dem zumindest eine Kennzahl (Code) des Dienstleistungsanbieters gespeichert ist, sowie mit einem GPS-Empfänger (3) ausgestattet ist, wobei weiters eine Zentrale (11) vorgesehen ist, die über das Mobiltelefonnetz (14, 4) mit jedem Dienstleistungsanbieter (1) verbindbar ist und die eine ausreichende Anzahl von Telefonanschlüssen (13) aufweist, wobei in der Zentrale (11) auf Grund der Telefonnummer des Anrufers oder eines von ihm eingewählten Codes dessen ungefährer oder genauer Standort ermittelt und aufgrund dessen ein Fahrzeug in der Nähe ausgewählt wird, wonach der Anrufer zu dem Dienstleistungsanbieter (1) in diesem Fahrzeug über das Mobiltelefonnetz (14, 4) verbunden wird, **dadurch gekennzeichnet, daß** in der Zentrale mehrere Wartespeicher (16) für verschiedene Sektoren (A, B ...) vorgesehen sind, in denen die Kennzahl (Code) von jedem Dienstleistungsanbieter (1), der in dem entsprechenden Sektor (A, B ...) auf einen Auftrag wartet, gespeichert ist, daß auf Grund des ermittelten Standorts des Anrufers der Sektor (A, B ...), in dem dieser Standort liegt oder der diesem am nächsten liegt, ausfindig gemacht wird, daß der Dienstleistungsanbieter (1) mit der höchsten Priorität (Prio) im Wartespeicher (16) des entsprechenden Sektors (A, B ...) ausgewählt wird, daß ein Geschwindigkeitsmelder (7) vorgesehen ist, wobei Mittel vorgesehen sind, die bei stillstehendem Fahrzeug und - wenn ein Taxameter (2) vorhanden ist - bei freiem Taxameter (2) die Kennzahl (Code) sowie die vom GPS (3) ermittelten Positionskoordinaten, ausgelöst durch den Dienstleistungsanbieter (1) oder automatisch, an die Zentrale (11) übermitteln, vorzugsweise über einen vom Mobiltelefonnetz (14, 4) unabhängigen Datenfunk (15, 5), worauf aufgrund der Positionskoordinaten der entsprechende Sektor (A, B ...) ermittelt wird und die Kennzahl (Code) des Dienstleistungsanbieters (1) mit geringster Priorität im Wartespeicher (16) dieses Sektors (A, B ...) abgespeichert wird, und dass Mittel vorgesehen sind, die bei Überschreiten einer bestimmten Geschwindigkeit, beispielsweise etwa 20 km/h, automatisch eine entsprechende Meldung an die Zentrale (11) erstatten, worauf der Dienstleistungsanbieter (1) aus dem Wartespeicher (16) gelöscht wird.

2. System nach Anspruch 1, **dadurch gekennzeichnet, daß** von der Zentrale (11) zum Dienstleistungsanbieter (1) dessen Reihung im Wartespeicher (16) sowie die Anzahl der Dienstleistungsanbieter im Wartespeicher (16) anderer Sektoren (A, B ...) übertragbar ist.

3. System nach Anspruch 1 oder 2, **dadurch gekennzeichnet, daß** in der Zentrale (11) ein Telefonnummernspeicher (17) vorgesehen ist, in dem die Telefonnummer jedes Anrufers und der Dienstleistungsanbieter (1), mit dem der Anrufer verbunden wurde, gespeichert werden, sodaß jeder Dienstleistungsanbieter (1) nach Auftragsübernahme einen automatischen Rückruf durchführen kann.

4. System nach einem der Ansprüche 1-3, **dadurch gekennzeichnet, daß** Mittel vorgesehen sind, die den Anrufer nach erfolgter Vermittlung zu einem Dienstleistungsanbieter (1) automatisch zum nächsten Dienstleistungsanbieter im Wartespeicher (16) schalten, falls keine Einigung über die Dienstleistung erzielt wird.

5. System nach einem der Ansprüche 1-4, **dadurch gekennzeichnet, daß** der GPS-Empfänger (3) derart gestaltet ist, dass er die Koordinaten des Dienstleistungsanbieters (1) regelmäßig automatisch übermittelt, z.B. immer dann, wenn das Fahrzeug eine bestimmte Strecke zurückgelegt hat,

## Claims

1. System for the dispatching of providers of mobile services (1), especially taxis (1), to customers, whereby each service provider (1) is equipped with a mobile telephone (4) with a stored list of numbers (6) in which at least one ID. number (code) of the service provider is stored, and with a GPS receiver (3) , whereby furthermore a dispatch center (11) is assumed which is both connectable to each of the service providers (1) via the mobile telephone network (14, 4) and has a sufficient number of telephone lines (13), whereby a nearby vehicle is selected by the central dispatch (11) on the basis of the caller's telephone number or on the basis of a code that he dials in which communicates his approximate or exact location, after which, on this basis, the caller will be connected to the service provider (1) in the vehicle by means of the mobile telephone network (14, 4), featuring a central dispatch office which has several waiting lists (16) reserved for various sectors (A, B, ...) in which the ID. number (code) of each service provider (1) who is in the appropriate sector (A,B,...) waiting for a fare is stored which, on the basis of the given location of the caller, the sector (A, B...) in which he or she is located or the closest neighboring sector is discovered so that the service provider (1) that is next in line (prio) on the waiting list (16) of the appropriate sector (A,B ...) is chosen, that a speed monitor (7) is assumed whereby the means is provided by which in the case of a stationary vehicle and when a taximeter (2) is installed―when there is a free taximeter (2) the ID. number (code) and the position coordinates relayed by the GPS (3) are sent either by the service provider (1) or automatically to the dispatch center (11) preferably by means of a mobile telephone network (14, 4) independent radio data device (15, 5), whereby the sector (A, B...) is found out on the basis of the position coordinates and the ID. number (code) of the service provider (1) at the bottom of the waiting list (16) of this sector (A,B...) is stored, and the means is provided so that in the event that a certain speed has been exceeded, for example 20 km/h, a signal to that effect is relayed to the dispatch center (11) whereby the service provider (1) is removed from the waiting list (16).

2. The system according the claim 1, which is distinguished by the fact that the service provider's (1) position in the waiting list as well as the number of service providers in the waiting lists (16) of other sectors (A,B...) can be relayed.

3. The system according to claim 1 or 2 which is distinguished by the fact that a telephone number database (17) is provided in the dispatch center (11) in which the telephone numbers of every caller and that of the service provider (1) with whom he or she has been connected are stored so that after the fare is taken every service provider (1) can make an automatic call back.

4. The system according to one of the claims 1-3 distinguished by the fact that the means is provided for that will automatically connect the caller after the contact is made with the next available service provider (1) on the waiting list (16) in the event that there has been no agreement made with the first.

5. The system according to claim 1-4 distinguished by the fact that the GPS receiver (3) is set up so that it automatically relays the coordinates of the service provider (1) on a regular basis, for example always after the vehicle has covered a certain distance.

## Revendications

1. Système pour la transmission téléphonique de prestataires mobiles(1), en particulier de taxis(1) aux clients. Chaque prestataire(1) est équipé d'un portable(4), d'une mémoire d'abonnés(6) dans lequel au moins un indice de l'abonné est sauvegardé ainsi que d'un récepteur de système de navigation(3). De plus un standard central(11) est prévu qui est joignable avec le prestataire(1) par le réseau de téléphone portable(14,4) et qui offre un nombre satisfaisant de raccordements téléphoniques(13). A cause du numéro de téléphone du correspondant qui appelle ou d'un code utilisé par cette personne la position approximative ou exacte de cette personne peut être repérée dans le standard central(11). Par conséquent un véhicule qui se trouve tout près est choisi et une communication est établie par réseau de téléphone portable (14,4) entre le correspondant qui appelle et le prestataire(1) dans ce véhicule, **caractérisé par le fait que** plusieurs mémoires d'attente(16) pour de différents secteurs(A,B...) dans le standard central sont prévues dans lesquelles l'indice de chaque prestataire(1) qui attend l'ordre dans le secteur correspondant(A,B...), est sauvegardé. Ainsi, à cause de la place repérée du correspondant qui appelle, le secteur(A,B...) dans lequel cette place se trouve ou qui est le plus proche de celui-ci, est repéré, le prestataire(1) de priorité préférentielle dans la mémoire d'attente(16) du secteur correspondant(A,B...) est choisi, un détecteur de vitesse(7) est prévu en prévoyant des moyens qui transmettent au standard central(11) en cas de véhicule arrêté- et s'il y a un taximètre(2)- en cas de taximètre(2) libre l'indice ainsi que les coordonnées de position , repérées par le récepteur de système de navigation (3)déclenchés par le prestataire(1) ou automatiquement, de préférence par une transmission de données(15,5) qui est indépendante du réseau de téiéphone portable(14,4). A l'aide de ces coordonnées de position le secteur correspondant(A ,B...) est repéré et l'indice du prestataire(1) de moindre priorité dans la mémoire d'attente(16) de ce secteur(A,B...) est sauvegardé. De plus des moyens sont prévus qui transmettent automatiquement en cas d'excès de vitesse, par exemple de 20km/h un message correspondant au standard central(11), ce qui entraine l'effacement du prestataire(1) de la mémoire d'attente(16).

2. Système selon revendication 1, **caractérisé par le fait que** des moyens soient prévus qui transmettent l'ordre dans la mémoire d'attente(16) ainsi que le nombre des prestataires dans la mémoire d'attente(16) d'autres secteurs(A,B...) du standard central(11) au prestataire(1).

3. Système selon revendication 1 ou 2 qui se **caractérise par le fait que** dans le standard central(11) une mémoire de numéros de téléphone(17) soit prévue dans laquelle les numéros de téléphone de chaque correspondant qui appelle et de tous les prestataires(1) avec le correspondant qui appelle a parlé, sont sauvegardés pour que chaque prestataire(1) puisse lancer un appel automatique.

4. Système selon une des revendications 1-3, **caractérisé par le fait que** des moyens soient prévus qui établissent automatiquement les communications entre le client et le prestataire (1) qui suit dans la liste de la mémoire d'attente (16) au cas où aucun accord quant au service soit atteint.

5. Système selon l'une des revendications 1-4 **caractérisé par le fait que** le récepteur de système de navigation (3) soit arrangé d'une facon qu'il transmette automatiquement et régulièrement les coordonnées du prestataire (1), par exemple au cas où le véhicule a fait une certaine distance.
